(19) Europäisches Patentamt

European Patent Office

Office européen des brevets

(11) **EP 4 343 727 B1**

(12) **EUROPEAN PATENT SPECIFICATION**

(45) Date of publication and mention
of the grant of the patent:
**04.02.2026   Bulletin 2026/06**

(21) Application number: **24157141.3**

(22) Date of filing: **30.12.2020**

(51) International Patent Classification (IPC):
*G08B 21/04* (2006.01)      *G01S 7/41* (2006.01)
*G01S 13/56* (2006.01)      *G01S 13/86* (2006.01)
*G01S 13/88* (2006.01)      *G08B 13/24* (2006.01)

(52) Cooperative Patent Classification (CPC):
**G08B 21/0469; G01S 7/411; G01S 7/415;
G01S 13/34; G01S 13/86; G01S 13/886;
G01S 15/88; G01S 17/88; G08B 21/043;
G08B 21/0492**

(54) **ACTIVE REFLECTED WAVE MONITORING**

AKTIVE REFLEXIONSWELLENÜBERWACHUNG

SURVEILLANCE ACTIVE D'ONDES RÉFLÉCHIES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **31.12.2019   GB 201919446**

(43) Date of publication of application:
**27.03.2024   Bulletin 2024/13**

(62) Document number(s) of the earlier application(s) in
accordance with Art. 76 EPC:
**20842733.6 / 4 085 438**

(73) Proprietor: **Essence Smartcare Ltd.
4672530 Herzlia Pituach (IL)**

(72) Inventors:
• **Hevdeli, Ilan**
  **5591233 Ganei-Tikva (IL)**
• **Amir, Ohad**
  **4642300 Herzlia (IL)**
• **Schnapp, Jonathan Mark**
  **6451234 Tel Aviv (IL)**

(74) Representative: **Marks & Clerk LLP
15 Fetter Lane
London EC4A 1BW (GB)**

(56) References cited:
EP-A1- 0 367 402      WO-A1-2016/155789
WO-A1-2019/231861      WO-A1-2020/223283

## Description

TECHNICAL FIELD

The present invention relates generally to a device and method for determining a status of an environment and a state of a person detected in the environment.

BACKGROUND

There is a need to use a monitoring system to automatically detect a status and/or presence of a person in a designated space, for example in an interior of a building. For example, an elderly person may end up in a hazardous situation in which they are unable to call for help, or unable to do so quickly. One such situation may be if they have fallen.

Some known systems have been developed in which the person wears a pendant which has an accelerometer in it to detect a fall based on kinematics. The pendant upon detecting a fall can transmit an alert signal. However the person may not want to wear, or may be in any case not wearing, the pendant.

Other reflected-wave based systems such as radar (whether radio wave, microwave or millimeter wave), lidar or sonar, are known to monitor a person in a designated space.

EP0367402 discloses dual sensing intrusion detection system comprising a passive infrared radiation detection sensor which generates a first output signal in response to the detection of an intruder in the volume of space, a second detection sensor which is directed to the same volume of space and generates a second output signal in response to detection of the intruder and a switch which activates the second detection sensor in response to the detection of the intruder by the infrared radiation detector. Logic circuit receives the first and second output signals and produces an alarm signal in response thereto to indicate the detection of the presence of the intruder in the volume of space.

WO2020223283 relates to a dual mode system that includes a passive infrared sensor with low power consumption and a RADAR-based sensor with higher power consumption that is only powered when the system determines a room is occupied with the passive sensor and no new movement is detected after a threshold duration.

WO 2016/155789 A1 discloses a fall detection system combining an infrared motion sensor and a distance sensor.

SUMMARY

The inventors have identified that the known reflected-wave based systems consume significant power, which presents a challenge to its viability in applications in which low power consumption is a key requirement.

According to one aspect of the present invention there is provided a computer implemented method according to claim 1.

According to another aspect of the present invention there is provided a device according to claim 12.

A non-claimed aspect described herein is a computer implemented method of determining a condition of a person in an environment, the method comprising: activating an active reflected wave detector; classifying a first status of the person as being in a fall position or a non-fall position, based on an output of the active reflected wave detector; wherein if the first status is that the person is in a fall position, the method further comprising: after receiving the output upon which the first status is classified, deactivating the active reflected wave detector for a first time window; upon expiry of the first time window, reactivating the active reflected wave detector and using the output of the active reflected wave detector after the reactivating to classify a second status of the person as being in a fall position or a non-fall position; and determining a condition of the person as being in a fall condition in response to at least the second status being that the person is in a fall position.

A non-claimed aspect described herein is a device for determining if a person has fallen in an environment, the device comprising a processor configured to: activate an active reflected wave detector; classify a first status of the person as being in a fall position or a non-fall position, based on an output of the active reflected wave detector; wherein if the first status is that the person is in a fall position, the processor further configured to: after receipt of the output upon which the first status is classified, deactivate the active reflected wave detector for a first time window; upon expiry of the first time window, reactivate the active reflected wave detector and use the output of the active reflected wave detector after the reactivation to classify a second status of the person as being in a fall position or a non-fall position; and determine a condition of the person as being in a fall condition in response to at least the second status being that the person is in a fall position.

A non-claimed aspect described herein is a computer implemented method of determining a condition of a person in an environment, the method comprising: receiving an output of an active reflected wave detector; as part of an active reflected wave monitoring process, classifying a first status of the person as being in a fall position or a non-fall position, based on the output of the active reflected wave detector; detecting motion associated with the person in the environment that satisfies at least one predefined criterion; in response to said detecting, aborting the active reflected wave monitoring process.

A non-claimed aspect described herein is provided a device for determining a condition of a person in an environment, the device comprising a processor configured to: receive an output of an active reflected wave detector; as part of an active reflected wave monitoring process, classify a first status of the person as being in a fall position or a non-fall position, based on the output of the active reflected wave detector; detect motion associated with the person in the environment that satisfies at least one predefined criterion; in response to said detection, abort the active reflected wave monitoring process.

According to another aspect of the present invention there is provided a non-transitory computer-readable storage medium comprising instructions as defined in claim 11. The instructions may be provided on one or more carriers. For example there may be one or more non-transient memories, e.g. a EEPROM (e.g. a flash memory) a disk, CD- or DVD-ROM, programmed memory such as read-only memory (e.g. for Firmware), one or more transient memories (e.g. RAM), and/or a data carrier(s) such as an optical or electrical signal carrier. The memory/memories may be integrated into a corresponding processing chip and/or separate to the chip. Code (and/or data) to implement embodiments of the present disclosure may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language.

These and other aspects will be apparent from the embodiments described in the following. The scope of the present disclosure is not intended to be limited by this summary nor to implementations that necessarily solve any or all of the disadvantages noted.

BRIEF DESCRIPTION OF THE SEVERAL VIEWS OF THE DRAWINGS

For a better understanding of the present disclosure and to show how embodiments may be put into effect, reference is made to the accompanying drawings in which:

Figure 1 illustrates an environment in which a device has been positioned;
Figure 2 is a schematic block diagram of the device;
Figures 3a and 3b illustrate a human body with indications of reflections measured by a reflective wave detector when the person is in a standing non-fall state and in a fall state;
Figure 4 illustrates a process for determining a status of an environment in accordance with embodiments of the present disclosure;
Figures 5a-d illustrate a process for determining a condition of a person in an environment; and
Figure 6 illustrates a process for determining a status of an environment.

DETAILED DESCRIPTION

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized, and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

In the following embodiments, like components are labelled with like reference numerals.

In the following embodiments, the term data store or memory is intended to encompass any computer readable storage medium and/or device (or collection of data storage mediums and/or devices). Examples of data stores include, but are not limited to, optical disks (e.g., CD-ROM, DVD-ROM, etc.), magnetic disks (e.g., hard disks, floppy disks, etc.), memory circuits (e.g., EEPROM, solid state drives, random-access memory (RAM), etc.), and/or the like.

As used herein, except wherein the context requires otherwise, the terms "comprises", "includes", "has" and grammatical variants of these terms, are not intended to be exhaustive. They are intended to allow for the possibility of further additives, components, integers or steps.

The functions or algorithms described herein are implemented in hardware, software or a combination of software and hardware in one or more embodiments. The software comprises computer executable instructions stored on computer readable carrier media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor.

Specific embodiments will now be described with reference to the drawings.

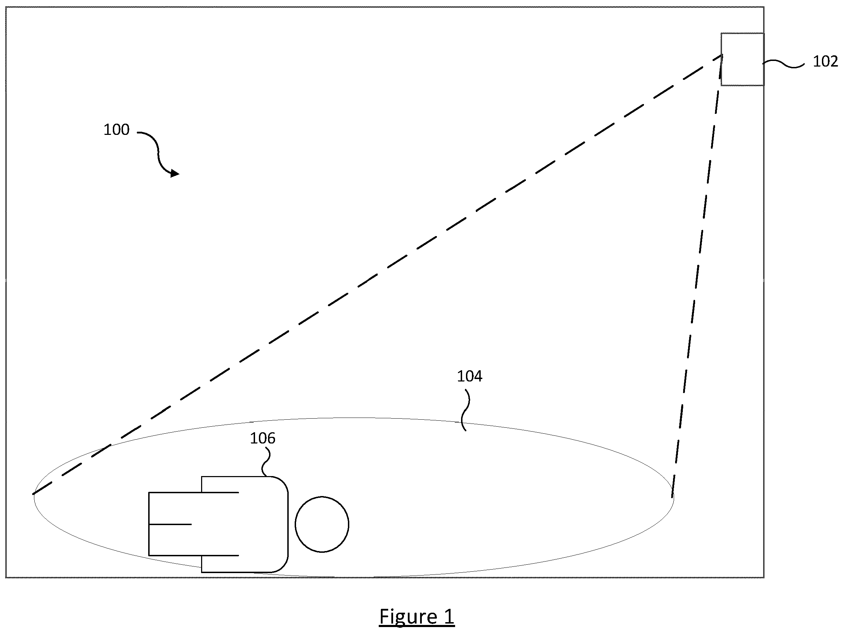

Figure 1 illustrates an environment 100 in which a device 102 has been positioned. The environment 100 may for example be an indoor space such as a room of a home, a nursing home, a public building or other indoor space. Alternatively the environment may be an outdoor space such as a garden. The device 102 is configured to monitor a space 104 in the environment 100 in which a person 106 may be present.

An embodiment of the present invention relates to the detection of a person 106 having fallen (that is, being in a fall position) which is illustrated in Figure 1.

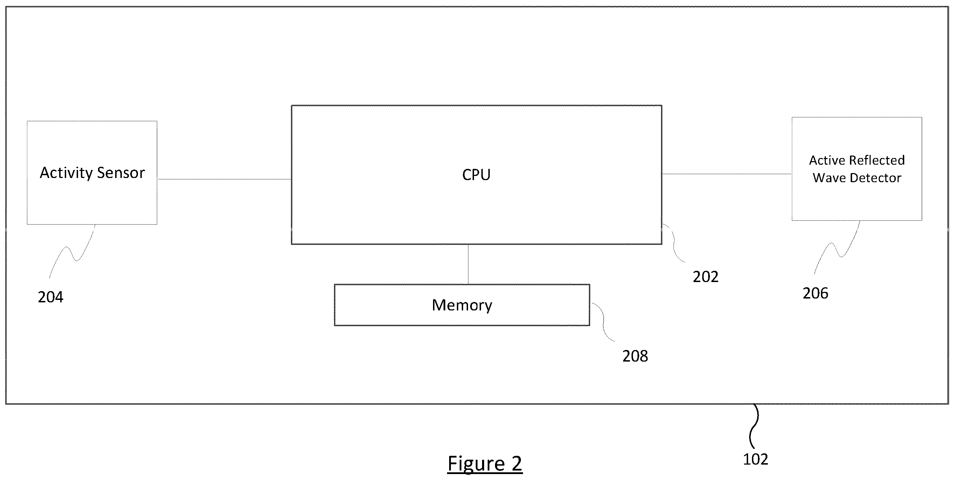

Figure 2 illustrates a simplified view of the device 102. A shown in Figure 2, the device 102 comprises a central processing unit ("CPU") 202, to which is connected a memory 208. The functionality of the CPU 202 described herein may be implemented in code (software) stored on a memory (e.g. memory 208) comprising one or more storage media, and arranged for execution on a processor comprising on or more processing units. The storage media may be integrated into and/or separate from the CPU 202. The code is configured so as when fetched from the memory and executed on the processor to perform operations in line with embodiments discussed herein. Alternatively it is not excluded that some or all of the functionality of the CPU 202 is implemented in dedicated hardware circuitry, or configurable hardware circuitry like an FPGA.

Figure 2 shows the CPU 202 being connected to an activity sensor 204 and an active reflected wave detector 206. While in the illustrated embodiment the activity sensor 204 and reflected wave detector are separate from the CPU 202, in other embodiments, at least part of processing aspects of the activity sensor 204 and/or active reflected wave detector 206 may be provided by a processor that also provides the CPU 202, and resources of the processor may be shared to provide the functions of the CPU 202 and the processing aspects activity sensor 204 and/or active reflected wave detector 206. Similarly, functions of the CPU 202, such as those described herein, may be performed in the activity sensor 204 and/or the active reflected wave detector 206. It will be appreciated from the below that in some embodiments, the activity sensor 204 may not be present. In embodiments where the device 102 comprises the activity sensor 204, the active reflected wave detector 206 consumes more power in an activated state (i.e. when turned on and operational) than the activity sensor 204 does when in an activated state.

As shown in Figure 2, the device 102 may house both the activity sensor 204 and the active reflected wave detector 206. Alternatively, the activity sensor 204 may be external to the device 102 and be coupled to the CPU 202 by way of a wired or wireless connection. Similarly, the active reflected wave detector 206 may be external to the device 102 and be coupled to the CPU 202 by way of a wired or wireless connection. Further, the outputs of the activity sensor 204 and/or active reflected wave detector 206 may be wirelessly received from via an intermediary device that relays, manipulates and/or in part produces their outputs, for example a control hub of a monitoring and/or home automation system, which may in some cases comprise a security system.

In some embodiments, the CPU 202 is configured to detect activity in the monitored space 104 based on an output of the activity sensor 204. The activity sensor 204 may comprise a motion sensor such as a passive infrared (PIR) sensor. The output from the PIR sensor may be analysed in the CPU to detect motion, or the activity sensor 204 may itself be the motion detector. The motion detector is preferably a PIR detector, however it could be an active reflected wave sensor, for example radar, that detects motion based on the doppler effect. For example, the activity sensor 204 may be a radar based motion detector which detects motion based on the doppler component of a radar signal. The activity sensor 204 is not limited to being a motion detector, and in some embodiments may detect activity in the monitored space 104 by way of vibration detection or sound detection.

In some embodiments, the CPU 202 is configured to detect the presence of a person in the monitored space 104, and if a person is present, classify the state of the person based on an output of the active reflected wave detector 206.

The active reflected wave detector 206 may operate in accordance with one of various reflected wave technologies.

Preferably, the active reflected wave detector 206 is a radar sensor. The radar sensor 206 may use millimeter wave (mmWave) sensing technology. The radar is, in some embodiments, a continuous-wave radar, such as frequency modulated continuous wave (FMCW) technology. Such a chip with such technology may be, for example, Texas Instruments Inc. part number IWR6843. The radar may operate in microwave frequencies, e.g. in some embodiments a carrier wave in the range of 1-100GHz (76-81Ghz or 57-64GHz in some embodiments), and/or radio waves in the 300MHz to 300GHz range, and/or millimeter waves in the 30GHz to 300GHz range. In some embodiments, the radar has a bandwidth of at least 1 GHz. The active reflected wave detector 206 may comprise antennas for both emitting waves and for receiving reflections of the emitted waves, and in some embodiment different antennas may be used for the emitting compared with the receiving.

The active reflected wave detector 206 is not limited to being a radar sensor, and in other embodiments, the active reflected wave detector 206 is a lidar sensor, or a sonar sensor.

The active reflected wave detector 206 being a radar sensor is advantageous over other reflected wave technologies in that radar signals can transmit through some materials, e.g. wood or plastic, but not others - notably water which is important because humans are mostly water. This means that the radar can potentially "see" a person in the environment 100 even if they are behind such an object. This is not the case for sonar.

Each of the activity sensor 204 and the active reflected wave detector 206 has a field of view. The activity sensor 204 and the active reflected wave detector 206 are arranged such that their fields of view overlap. The fields of view of the activity sensor 204 and the active reflected wave detector 206 may partially or fully overlap. Thus there is at least a partial overlap between the fields of view of the activity sensor 204 and the active reflected wave detector 206.

The overlapping, or partial overlapping, of the fields of view is, in some embodiments, in the 3D sense. However in other embodiments the overlapping, or partial overlapping, of the fields of view may be in a 2D, plan view, sense. For example there may be an overlapping field of view in the X and Y axes, but with a non-overlap in the Z axis.

In embodiments whereby the activity sensor 204 is a motion detector, the motion detector 204 may have a vertical field of view limited to heights above a predefined height threshold (e.g. 70 cm) above the floor level, so as to avoid triggering by pets. In these embodiments, the active reflected wave detector 206 on the other hand would have a field of view that includes heights below this height threshold, e.g. between the threshold and the floor level, to be able to detect the person when they are close to the floor - which is a situation that means they may have fallen. In some embodiments the field of view of the active reflected wave detector 206 also includes heights above the height threshold so as to assist in any reflected-wave measurements of the person when the person is standing. In embodiments, the active reflected wave detector 206 is used to determine whether the person is in a posture that may be relate to them having fallen. This may be achieved for example by detecting a height associated with a certain location on their body, e.g. a location above their legs.

In operation, the active reflected wave detector 206 performs one or more reflected wave measurements at a given moment of time, and over time these reflected wave measurements can be correlated by the CPU 202 with the presence of a person and/or a state of the person and/or a condition of the person. In the context of the present disclosure, the state of the person may be a characterization of the person based on a momentary assessment. For example, a classification passed on their position (e.g. in a location in respect to the floor and in a configuration which are consistent or inconsistent with having fallen) and/or their kinematics (e.g. whether they have a velocity that is consistent or inconsistent with them having fallen, or having fallen possibly being immobile). In the context of the present disclosure, the condition of the person may comprise a determination of an aspect of the person's health or physical predicament, for example whether they are in a fall condition whereby they have fallen and are substantially immobile, such that they may not be able (physically and/or emotionally) to get to a phone to call for help. In some embodiments this involves an assessment of the person's status over time, such as in the order or 30-60 seconds. However, the condition of the person may in some contexts be synonymous with the status of the person. For example, by determining that the person is in a safe supported state or a standing state, it may be concluded that the person is not currently in a fall condition, whereby they are on the floor and potentially unable to seek help. It may additionally or alternatively be concluded that they are in a resting condition because of their status being determined to be in a safe supported state, e.g. lying on a bed. In another example their condition may be classified as active and/or mobile based on a determination of a walking status.

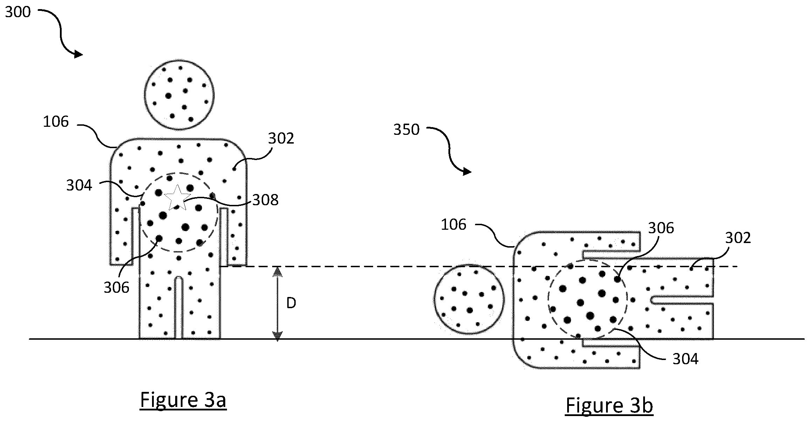

Figure 3a illustrates a free-standing human body 106 with indications of reflective wave reflections therefrom in accordance with embodiments.

For each reflected wave measurement, for a specific time in a series of time-spaced reflective wave measurements, the reflective wave measurement may include a set of one or more measurement points that make up a "point cloud". Each point 302 in the point cloud may be defined by a 3-dimensional spatial position from which a reflection was received, and defining a peak reflection value, and a doppler value from that spatial position. Thus, a measurement received from a reflective object may be defined by a single point, or a cluster of points from different positions on the object, depending on its size. In some embodiments the point cloud is prefiltered to exclude points for which a doppler value is below a threshold.

Figure 3a illustrates a map of reflections. The size of the point represents the intensity (magnitude) of energy level of the radar reflections (see larger point 306). Different parts or portions of the body reflect the emitted signal (e.g. radar) differently. For example, generally, reflections from areas of the torso 304 are stronger than reflections from the limbs. Each point represents coordinates within a bounding shape for each portion of the body. Each portion can be separately considered and have separate boundaries, e.g. the torso and the head may be designated as different portions. The point cloud can be used as the basis for a calculation of a reference parameter or set of parameters which can be stored instead of or in conjunction with the point cloud data for a reference object (human) for comparison with a parameter or set of parameters derived or calculated from a point cloud for radar detections from an object (human).

When a cluster of measurement points are received from an object in the environment 100, a location of a particular part/point on the object or a portion of the object, e.g. its centre, may be determined by the CPU 202 from the cluster of measurement point positions having regard to the intensity or magnitude of the reflections (e.g. a centre location comprising an average of the locations of the reflections weighted by their intensity or magnitude). As illustrated in figure 3a, the reference body has a point cloud from which its centre has been calculated and represented by the location 308, represented by the star shape. In this embodiment, the torso 304 of the body is separately identified from the body and the centre of that portion of the body is indicated. In alternative embodiments, the body can be treated as a whole or a centre can be determined for each of more than one body part e.g.

the torso and the head, for separate comparisons with centres of corresponding portions of a scanned body.

In one or more embodiments, the object's centre or portion's centre is in some embodiments a weighted centre of the measurement points. The locations may be weighted according to an Radar Cross Section (RCS) estimate of each measurement point, where for each measurement point the RCS estimate may be calculated as a constant (which may be determined empirically for the reflected wave detector 206) multiplied by the signal to noise ratio for the measurement divided by $R^4$, where R is the distance from the reflected wave detector 206 antenna configuration to the position corresponding to the measurement point. In other embodiments, the RCS may be calculated as a constant multiplied by the signal for the measurement divided by $R^4$. This may be the case, for example, if the noise is constant or may be treated as though it were constant. Regardless, the received radar reflections in the exemplary embodiments described herein may be considered as an intensity value, such as an absolute value of the amplitude of a received radar signal.

In any case, the weighted centre, WC, of the measurement points for an object may be calculated for each dimension as:

$$ WC = \frac{1}{\sum_{n=1}^{N} W_n} \sum_{n=1}^{N} (W_n P_n) $$

Where:

 $N$ is the number of measurement points for the object;
 $W_n$ is the RCS estimate for the $n^{th}$ measurement point; and
 $P_n$ is the location (e.g. its coordinate) for the $n^{th}$ measurement point in that dimension.

In some embodiments, the CPU 202 is configured to process measured wave reflections from the environment that are measured by the active reflected wave detector 206 to detect whether a person is in the environment and, if a person is detected, classify a state of the person in the environment.

As will be described in more detail below, this need not be a two-step process i.e. of looking for a person and then classifying them. For example, the CPU 202 may take the output of the active reflected wave detector 206 and do a classification, wherein one of the outputs of the classification is that there is no person, or in other embodiments it may only conclude that there is no person if it fails to perform a classification of a person's status.

When classifying the state of a person, the CPU 202 may perform a determination that the person is in a fall position (i.e. a position that is consistent with them haven fallen) or a non-fall position (indicative that they are, at least temporarily, in a safe state). In embodiments of the present disclosure the determination that the person is in a fall position is used as an indicator that the person may be in need of help. Being in a position which is consistent with the person having fallen does not necessarily mean they have fallen, or have fallen such that they need help. For example, they may be on the floor for other reasons, or they may have had a minor fall from which they can quickly recover. However, if they remain in a fall position for sufficient time it may be concluded that they are sufficiently likely to have fallen to be classified as being in a fall condition, and the device 102 may therefore take appropriate action accordingly, e.g. by sending a notification to a remote device.

In some embodiments, the classification performed by the CPU 202 may provide further detail on the non-fall condition for example, the CPU 202 may be able to classify the person as being in a state from one or more of: a free-standing state (e.g. they are walking); a safe supported state which may be a reclined safe supported state whereby they are likely to be safely resting (e.g. a state in which they are in an elevated lying down position, or in some embodiments this may additionally encompass being in a sitting position on an item of furniture); and a standing safe supported state (e.g. they are standing and leaning on a wall). In other embodiments the non-fall states may be grouped differently. For example, the non-fall states may include a stationary non-floor position (encompassing both a reclined safe supported state and a standing stationary state whether supported or not in the standing state) and an ambulatory state. The CPU 202 may be able to classify the person as crawling, which may be regarded as a fall state or a non-fall state (given that if the person has fallen the person is still able to move so may be regarded as less critical) dependent on how the CPU 202 is configured.

The classification may be performed by the CPU 202 by looking at a set of sequential frames over a period of time and classifying the state of the person as being in a fall position based on the person's fall/non-fall positions for the respective frames. Multiple frames (e.g. 10 frames) may be used to determine whether there are more fall or non-fall results to improve the accuracy of the determination (the result which occurs more is the selected result).

### Using thresholds

In some embodiments, in order to detect and classify the state of a person the CPU 202 processes the measured wave reflections by determining one or more parameters associated with the measured wave reflections and then comparing the parameter(s) to one or more thresholds to detect and classify the state of a person.

The person may be tracked using a tracking module in the CPU 202. The tracking module can use any known tracking algorithm. For example, the active reflected wave detector 206 may generate a plurality of detection measurements (e.g. up to 100 measurements, or in other embodiments hundreds of measurements) for a given frame. Each measurement can be taken a defined time interval apart such as 0.5, 1, 2 or 5 seconds apart. Each detection measurement may include a plurality of parameters in response to a received reflective wave signal above a given threshold. The parameters for each measurement may for example include an x and y coordinate (and z coordinate for a 3D active reflected wave detector 206), a peak reflection value, and a doppler value corresponding to the source of the received radar signal.

The data can then be processed using a clustering algorithm to group the measurements into one or more measurement clusters corresponding to a respective one or more targets. An association block may then associate a given cluster with a given previously measured target. A Kalman filter of the tracking module may then be used to determine the next position of the target based on the corresponding cluster of measurements and the prediction of the next position based on the previous position and other information e.g. the previous velocity.

From the reflected wave measurements an RCS of an object represented by a cluster of measurement points can be estimated by summing the RCS estimates of the each of the measurement points in the cluster. This RCS estimate may be used to classify the target as a human target if the RCS is within a particular range potentially relevant to humans for the frequency of the signal emitted by the active reflected wave detector 206, as the RCS of a target is frequency dependent. Taking a 77 GHz radar signal as an example, from empirical measurements, the RCS (which is frequency dependent) of an average human may be taken to be in the order of $0.5m^2$, or more specifically in a range between 0.1 and 0.7 $m^2$, with the value in this range for a specific person depending on the person and their orientation with respect to the radar. The RCS of human in the 57-64GHz spectrum is similar to the 77 GHz RCS - i.e. 0.1 and 0.7 $m^2$.

The tracking module may output values of location, velocity and/or RCS for each target, and in some embodiments also outputs acceleration and a measure of a quality of the target measurement, the latter of which is essentially to act as a noise filter. The values of position (location) and velocity (and acceleration, if used) may be provided in 2 or 3 dimensions (e.g. cartesian or polar dimensions), depending on the embodiment.

The Kalman filter tracks a target object between frames and therefore multiple frames of reflection measurement data can be used to determine a person's velocity. Three or more frames (e.g. 3-5 frames) may be required in order to determine that there is movement exceeding a movement threshold. The frames may be taken at a rate of 2Hz, for example.

In order to classify the state of the person in the environment, the CPU 202 may determine a height metric associated with at least one measurement of a reflection from the person conveyed in the output of the active reflected wave detector 206 and compare the height metric to at least one threshold.

The height metric may be a height of a weighted centre of the measurement points of a body or part thereof (where each measurement is weighted by the RCS estimation), and the CPU 202 may compare this height metric to a threshold distance, D, from the floor (e.g. 30cm) and determine that the person in the environment is in a standing (non-fall) position if the height metric exceeds the threshold distance, this is illustrated in Figure 3a.

The height metric used to classify the state of the person is not limited to being a height of a weighted centre of the measurement points of the person's body or part thereof. In another example, the height metric may be a maximum height of all of the height measurements associated with the person's body or part thereof. In another example, the height metric may be an average height (e.g. median z value) of all of the height measurements of the person's body or part thereof. In the case of using a weighted centre or average height, the "part thereof" may beneficially be a part of the body that is above the person's legs to more confidently distinguish between fall and non-fall positions.

If the height metric (e.g. weighted centre, average height and/or maximum height) is within (less than) the threshold distance, D, from the floor (e.g. 30cm), the CPU 202 may determine that the person in the environment is in a fall position, this is illustrated in Figure 3b. If the height metric is greater than a first threshold distance from the floor but less than a second threshold distance from the floor (for example the a maximum height amongst the measurements associated with body is between 30cm and 1.3m, the CPU 202 may be able to detect that the person is in a safe reclined position, e.g. lying down on a bed or couch, which is an example of a non-fall position.

In order to classify the state of the person in the environment, the CPU 202 may determine a velocity associated with the person using the measurements of reflections that are conveyed in the output of the active reflected wave detector 206 and compare the velocity to a velocity threshold. The tracking module referred to above may output a value of velocity for the target (person in the environment). For example, the velocity may assist in classifying whether a human is present in the environment. For example, it may be concluded that no human is present if there is no detected object having a velocity within a predefined range and or having certain dynamic qualities that are characteristic of a human. The comparison between the detected velocity associated with the person and the velocity threshold can also assist with narrowing the classification down to a specific state. For example if the detected velocity associated with the person is greater than the velocity threshold the CPU 202 can determine that the person is moving and is in either a crawling state or standing ambulatory state (e.g. they are walking). If the detected velocity associated with the person is not greater than the velocity threshold the CPU 202 may determine that the person is not moving and is either in a fall state or are in a reclined supported state (e.g. they are in an elevated lying down position or in a sitting position) or standing still.

Further if for a defined duration of time, a standard deviation of the velocity is below a predefined threshold it may be concluded that a person that is standing still is supported, e.g. leaning on a wall; or if above the threshold, that they are free-standing. In other embodiments the value of the velocity threshold alone or in combination with the standard deviation may be used to distinguish a free-standing state from a supported state.

In order to classify the state of the person in the environment, the CPU 202 may determine a spatial distribution, e.g. a variance or standard deviation, of the measurements of reflections that are conveyed in the output of the active reflected wave detector 206 and compare the spatial distribution to a threshold. This may include determining a horizontal spatial distribution of the measurements of reflections that are conveyed in the output of the active reflected wave detector 206 and comparing the horizontal spatial distribution to a horizontal spatial distribution threshold. Alternatively or additionally, this may include determining a vertical spatial distribution of the measurements of reflections that are conveyed in the output of the active reflected wave detector 206 and comparing the vertical spatial distribution to a vertical spatial distribution threshold.

The comparison between the spatial distribution(s) to a threshold can assist with narrowing the classification down to a specific state. For example, if the vertical spatial distribution is greater than the vertical spatial distribution threshold (high z variance) and/or the horizontal spatial distribution is less than the horizontal spatial distribution threshold (low x-y plane variance), then the CPU 202 can determine that the person is in a standing state, for example they may be in free-standing ambulation state (e.g. they are walking), in a safe supported state (e.g. they are standing and leaning on a wall), or a free-standing unsupported state. In another example, if the vertical spatial distribution is less than the vertical spatial distribution threshold (low z variance) and/or the horizontal spatial distribution is greater than the horizontal spatial distribution threshold (high x-y plane variance), then the CPU 202 can determine that the person is in a fall state or in a safe supported state (e.g. they are in an elevated lying down position). Alternatively the ratio of the horizontal spatial distribution to vertical spatial distribution may be compared with a threshold. Such a ratio being below a threshold that has a value less than 1 may be taken to indicate that the person is in a standing state. Such a ratio being above a threshold that has a value greater than 1 may be taken to indicate that the person is in a fall state or in an elevated lying down position, and hence in a safe supported state.

### *Using a classifier model*

In other embodiments, in order to detect and classify the state of a person, rather than the CPU 202 determining one or more parameters associated with the measured wave reflections and then comparing the parameter(s) to one or more thresholds, the CPU 202 may supply the determined parameters as inputs into a trained classifier module running on the CPU 202.

The trained classifier module may be trained using one or more training data sets which include reflective wave measurements and a corresponding definition of which output state the reflective wave measurements correspond to.

The received parameters may include one or more of: (i) a height metric associated with at least one reflection; (ii) a velocity associated with the person using the measurements of reflections; and (iii) a spatial distribution characterization of the measurements (e.g. one or more of a horizontal spatial distribution (e.g. a variance or equivalently a standard deviation), a vertical spatial distribution and a ratio therebetween. Additionally, RCS estimates may be used to aid in assessing whether the object being classified is in fact a human. Analysis of the wave reflections to determine whether the object is likely to be human may be performed before or after the classification, but in other embodiments it may be performed as part of the classification. Thus, the classifier may additionally receive the following parameters: (iv) a sum of RCS estimates, and in some embodiments (v) a distribution (e.g., variance or equivalently standard deviation) of RCS estimates. For example, the received parameters may be: 1. an average height (e.g. median z value); 2. a standard deviation of RCS estimates; 3. A sum of RCS estimates; and 4. a standard deviation of height(z) values.

In these embodiments the trained classifier module uses the received parameters and the training data set(s) to classify the state of the person in the environment.

It will be appreciated that this can be implemented in various ways.

The trained classifier module may be used at operation time to determine a classification score, using a method known by the person skilled in the art. The score may for example provide an indication of a likelihood or level of confidence that the received parameters correspond to a particular classifier output state. A determination of a particular classification (e.g. a fall position) may for example be based on whether a classification confidence score is greater than a threshold then the person is determined to be in that state. For example, the CPU 202 may determine that the person is in a fall state if the output of the classifier determines that there is more than a 60% likelihood (or some other predefined likelihood threshold, which may optionally be greater than 50%, or even less than 50% to be conservative/cautious) of the person being in a fall position.

It will be appreciated that it may not be necessary for the classifier module to be trained with a data set associated with a particular classifier state in order for the classifier module to classify the person as being in the particular classifier state. Consider the simple example whereby the trained classifier module is configured to indicate that the person is in one of two states (i.e. in a fall state or a non-fall state), the trained classifier module may have been trained with a data set including reflective wave measurements corresponding to a person in a fall state, and based on a low correlation of the received parameters to the training data set corresponding to a person in a fall state, the trained classifier module may be configured to indicate that the person is in a non-fall state.

Furthermore, as noted above, there need not be a two-step process of looking for a person and then classifying them. A trained classifier module could be used that is trained of different data that is not necessarily limited to reflections from discreet objects or from objects already identified as potentially being human. For example a classifier could be fed respective sets of training data for (i) a person is present and in a fall position; (ii) a person is present and in a non-fall position; and (iii) no person is present. The classifier may determine a classification of active reflective wave measurements based on which of the trained states it is most closely correlated with.

Any other method, known by the person skilled in the art, of training and using the classifier based on (i) the receiving parameters as exemplified above, and (i) the relevant output states may alternatively be used.

### I. Determining a status of an environment and/or of a person therein

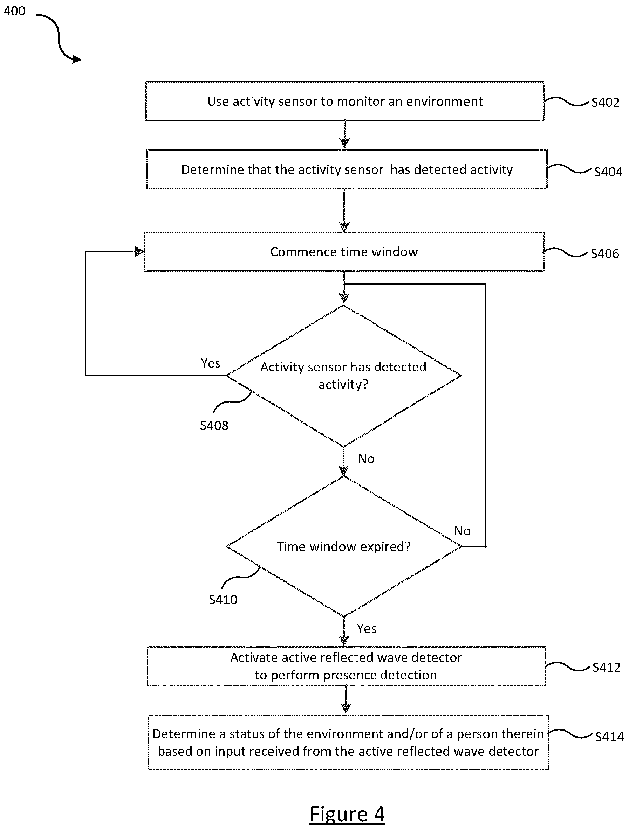

We now describe a first example of the present disclosure with reference to Figure 4 which illustrates a process 400 performed by the CPU 202 in accordance with embodiments of the present invention for determining a status of an environment and of a person therein.

It should be noted that when the process 400 is started, the active reflected wave detector 206 is in a deactivated state. In the deactivated state the active reflected wave detector 206 may be turned off. Alternatively, in the deactivated state the active reflected wave detector 206 may be turned on but in a low power consumption operating mode whereby the active reflected wave detector 206 is not operable to perform reflected wave measurements.

At step S402, the CPU 202 uses the activity sensor 204 to monitor the monitored space 104 in the environment 100. Step S402 may comprise the CPU 202 activating (i.e. turning on) the activity sensor 204. Alternatively, the activity sensor 204 may be activated (tuned on) immediately once the device 102 is powered on, and there may be no ability or need for the CPU to issue a command to activate the activity sensor 204 since it is automatically and always on.

At step S404, the CPU 202 determines that the activity sensor 204 has detected activity in the environment 100 based on monitoring the output of the activity sensor 204.

In response to the determination at step S404, the process 400 proceeds to step S406 where the CPU 202 commences a time window having a predefined duration. The predefined duration may be in the range 30 secs to 120 secs. The predefined duration may be in the range 45 secs to 105 secs. The predefined duration may be in the range 48 secs to 72 secs (i.e. 1 minute +/- 20%). The predefined duration may for example be 1 minute. This time window has an expiry that is extended by detections of activity by the activity sensor 204.

In particular, if the CPU 202 determines at step S408 that the activity sensor 204 has detected activity, then the process 400 loops back to step S406 where the CPU 202 commences the time window again. That is, the time window commences after a last activity detection.

Step S406 may be performed in a number of ways. In one example, at step S406 the CPU 202 may control a counter (not shown in the figures), which may be internal or external to the CPU 202, to start counting. It will be appreciated that this counter may count incrementally or decrementally. In these embodiments, if after the counter has started counting the CPU 202 determines at step S408 that the activity sensor 204 has detected activity, the CPU 202 resets the counter. In another example, at step S406 the CPU 202 may start monitoring a real time clock that always runs and use the real time clock to monitor the time window, e.g. by setting a time associated with the real time clock at which the time window will end.

Upon determining at step S410 the expiry of the time window during which the activity sensor 204 has not detected activity in the environment, the process 400 proceeds to step S412 where the CPU 202 activates the active reflected wave detector 206 so that it is in an activated state and operable to measure wave reflections from the monitored space 104 of the environment 100.

In embodiments whereby prior to step S412 the active reflected wave detector 206 was turned off, step S412 comprises the CPU 202 turning the active reflected wave detector 206 on. In embodiments whereby prior to step S412 the active reflected wave detector 206 was turned on but in a low power consumption operating mode, step S412 comprises the CPU 202 controlling the active reflected wave detector 206 to be in a normal operating mode in which it is operable to perform reflected wave measurements.

At step S414, the CPU 202 determines a status of the environment and a person therein based on an output of the active reflected wave detector 206 that is indicative of one or more of the measured wave reflections.

As noted above, the active reflected wave detector 206 consumes more power in an activated state (i.e. when turned on and operational) than the activity sensor 204 in an activated state. Thus the process 400 uses a relatively low power consuming activity sensor (e.g. a PIR detector) to determine whether there is activity (e.g. movement) in a monitored space 104 of the environment 100. If no activity is detected for a first predetermined amount of time, then (and only then) the active reflected wave detector 206 is used to determine a status of the environment and a person therein.

If activity is no longer detected, either it is because the person has stopped moving enough to be detected by the activity sensor 204 or they can't be seen by the activity sensor (a probable cause of which is that they have left the monitored space 104). The former situation may mean that the person has fallen, alternatively they may be in a non-fall state for example they may be standing and not moving, or they may be safely resting, e.g. on a bed. If the activity sensor 204 started to detect activity (so the person entered the room), but thereafter detected no activity for the first predetermined amount of time, the active reflected wave detector 206 is used to determine if the situation is the former or the latter, i.e. whether they are in the monitored space 104 or not detectable (which is interpreted to mean that they are not in the monitored space 104).

Step S414 comprises detecting whether a person is in the environment whereby the status of the environment is determined to be either occupied or unoccupied.

In the event that a person is detected in the environment, step S414 further comprises determining a state of the person detected in the monitored space 104 of the environment 100.

As noted above, in order to detect and classify the state of a person the CPU 202 may processes measured wave reflections by determining one or more parameters associated with the measured wave reflections and then comparing the parameter(s) to one or more thresholds to detect and classify the state of a person. In other embodiments, the CPU 202 determines one or more parameters associated with the measured wave reflections and then supplies the determined parameters as inputs into a trained classifier module running on the CPU 202. An explanation on how the CPU 202 may determining a state of the person detected in the monitored space 104 of the environment using these methods is described above and thus is not repeated here.

According to the invention, by only activating the active reflected wave detector 206 in the situation when there is potentially a person in the environment in a fall position (i.e. when there has been no activity detections in a time window) less power is consumed and this efficient use of power is particularly advantageous in embodiments where the device 102 is powered by a power source with a limited supply (e.g. a battery).

In response to completion of the step S414 CPU 202 may be configured to deactivate the active reflected wave detector 206 to provide further power savings.

## II. Determining a condition of a person in an environment

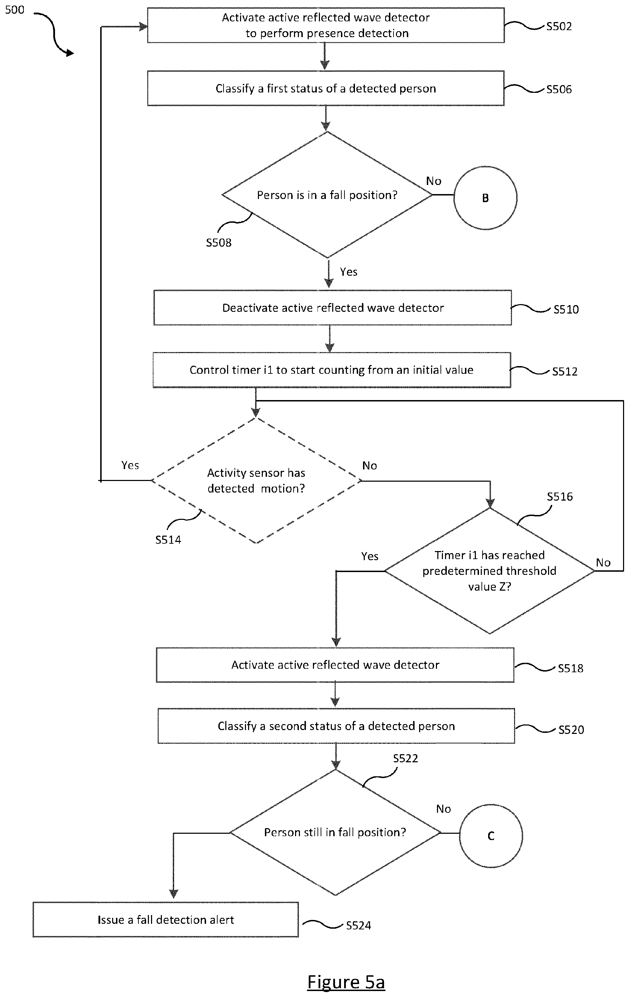

We now describe a second non-claimed example of the present disclosure with reference to Figures 5a-d which illustrates a process 500 performed by the CPU 202 for determining a condition of a person in an environment.

The second example relates to the detection of a fall condition necessitating an alert action, which is distinct from a fall position which may be temporary, non-threatening, and/or easily confused with other reasons for being on the floor.

As described in more detail below, in the second example, the activity sensor 204 is optional and may not be present in the device 102.

It should be noted that when the process 500 is started, the active reflected wave detector 206 is in a deactivated state. In the deactivated state the active reflected wave detector 206 may be turned off. Alternatively, in the deactivated state the active reflected wave detector 206 may be turned on but in a low power consumption operating mode whereby the active reflected wave detector 206 is not operable to perform reflected wave measurements.

At step S502 the CPU 202 activates the active reflected wave detector 206 so that it is in an activated state and operable to measure wave reflections from the environment.

In implementations whereby prior to step S502 the active reflected wave detector 206 was turned off, step S502 comprises the CPU 202 turning the active reflected wave detector 206 on. In implementations whereby prior to step S502 the active reflected wave detector 206 was turned on but in a low power consumption operating mode, step S502 comprises the CPU 202 controlling the active reflected wave detector 206 to be in a normal operating mode in which it is operable to perform reflected wave measurements.

At step S506, the CPU 202 classifies a first status of a person detected in the environment as being in a fall position or a non-fall position, based on measured wave reflections in the output of the active reflected wave detector 206.

Steps S502 and S506 may correspond to steps S412 and S414 described above with reference to Figure 4. That is, the first example and the second example described herein may be combined. However this is not essential and the first example and the second example may be independent from each other.

In response to the person being classified as being in a fall position at step S508, at step S510 the active reflected wave detector 206 is deactivated. Whilst step S510 is shown as being performed after step S508 this need not be the case, the deactivation merely has to happen after the relevant data needed for the classifying (at step S506) is received.

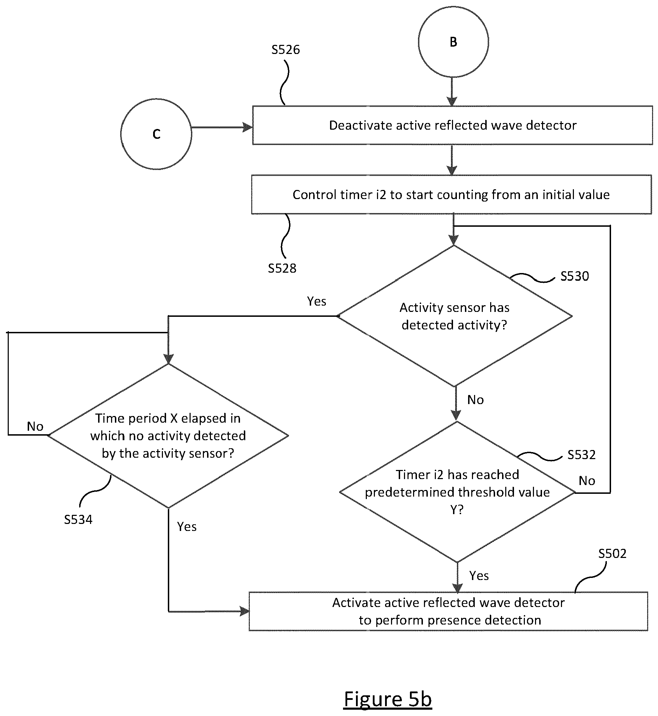

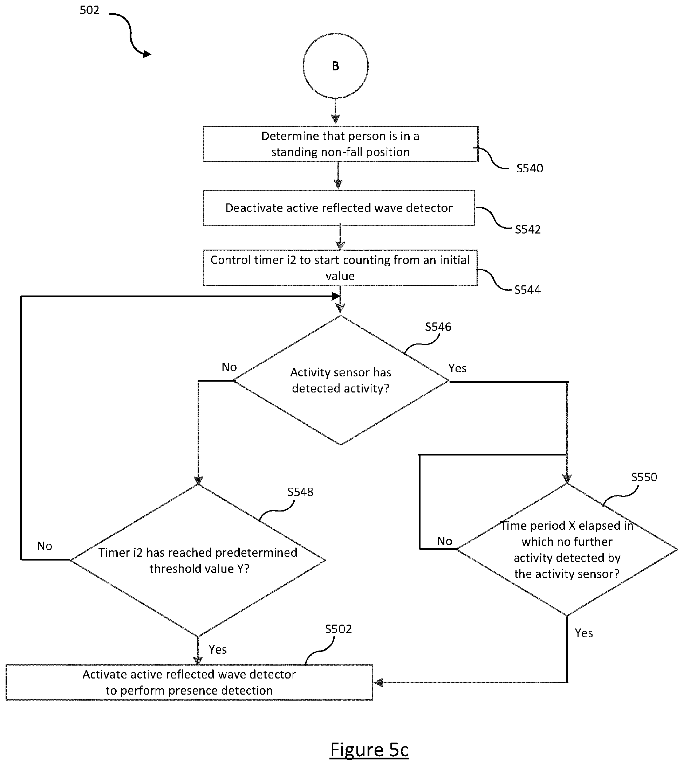

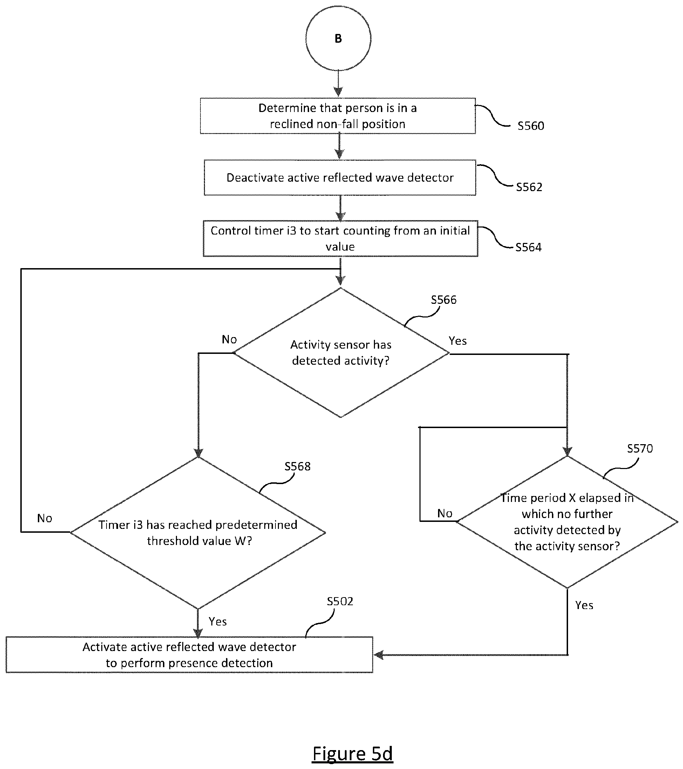

The process 500 proceeds to step S512 where the CPU 202 commences a first time window having a predefined duration (shown in the Figure 5 as being Z seconds, where the value of Z can be set accordingly). In one example Z is 30 seconds. When the first example and the second example described herein are combined, the value of Z may be less than the duration of the time window commenced at step S406.

Step S512 may be performed in a number of ways. In one example, at step S512 the CPU 202 may control a counter i1, which may be internal or external to the CPU 202, to start counting. It will be appreciated that this counter may count incrementally or decrementally. In another example, at step S512 the CPU 202 may start monitoring a real time clock that always runs and using the real time clock to monitor the first time window.

Upon determining that the first time window has expired at step S516 (e.g. the counter i1 has reached a threshold value of Z), the process 500 proceeds to step S518 where the CPU 202 activates the active reflected wave detector 206 so that it is in an activated state and operable to measure wave reflections from the environment.

At step S520, after the reactivating, the CPU 202 uses the output of the active reflected wave detector to classify a second status of the person as being in a fall position or a non-fall position.

If the CPU 202 classifies the second status of the person detected in the environment as being in a fall position at step S520 (determined at step S522), at step S524 the CPU 202 issues a fall detection alert or notification.

Thus it can be seen that assuming the person is classified as being in a fall position at step S508, the CPU 202 then waits predetermined amount of time (Z secs) and then reclassifies (at step S520) to see if the person is still in the same position, and if so determines that there is a person in a fall condition (because they have been in a fall position for some amount of time deemed to indicate they may need help), and issues an alert. Embodiments of the present disclosure, advantageously conserve energy by switching the active reflected wave detector 206 to a lower power state (e.g. off or asleep) between the reflected wave measurements performed by the active reflected wave detector 206.

The issuance of the fall detection alert at step S524 may be performed in various ways. For example the CPU 202 may transmit an alert message to a remote device (not shown in Figure 1), which may be via a wireless connection. This remote device may for example be a mobile computing device (e.g. a tablet or smartphone) associated with a carer or relative. Alternatively the remote device may be a computing device in a remote location (e.g. a personal computer in a monitoring station). Alternatively the remote device may be a control hub in the environment 100 (e.g. a wall or table mounted control hub). The control hub may be a control hub of a system that may be monitoring system and/or may be a home automation system. The notification to the control hub is in some implementations via wireless personal area network, e.g. a low-rate wireless personal area network. Alternatively or additionally the CPU 202 may control a visual output device (e.g. a light) on device 102 to output a visual alert of the fall detection. Alternatively or additionally the CPU 202 may control an audible output device (e.g. a speaker) on device 102 to output an audible alert of the fall detection.

As shown by optional step S514, in some implementations, if a signal indicative of activity in the monitored space 104 of the environment is received from the activity sensor 204 during the first time window Z then the CPU 202 does not perform the second classification at step S520. Rather, the process 500 returns to step S502, thereby only triggering an alarm if there is a first time window Z having at its start and end, respective fall position determinations, and with no movement detected therebetween by the (separate and low power) activity sensor 204.

Whilst Figure 5a illustrates a single subsequent reclassification of the person's status in the environment (at step S520), it will be appreciated that multiple reclassification of the person as being in a fall position may be required before the fall detection alert is issued at step S524. Optionally, in addition to steps S508 and S522, a third status determination may be made after S522 after the passing of another time window, which may for example have the same duration as the first time window Z. If the person is determined to be in a fall position for all three status determinations, then a fall detection alert may be issued. The/each off/inactive period between on/active periods may be longer than on/active period required to make each status determination. However, using just two status determinations (at steps S508 and S522), with an off/inactive period in between them, has an advantage of involving the minimum usage of the active reflected wave detector 206 over the time window and therefore saves the most power. A person may rise from the fall position between the on/active states, and such rising will therefore not be detected. However, identifying that the person is detected in fall positions at least at the start and end points of a time window may be sufficiently indicative of the person being in a condition for which they may need assistance while balancing the potential for false alarms.

In the second example, in response to determining at step S508 that the person is in a fall position, the time window is used to trigger a further classification of the person's state to check that the person is still in the fall position (i.e. they have been unable to get up from the floor). The device 102 need not detect all cases that the person has fallen - for example if a person has fallen and gotten up quickly thereafter so it isn't detected, it doesn't matter, because the person is not immobile on the floor.

As noted above, the CPU 202 may be able to classify the person as crawling, which may be regarded as a fall position or a non-fall position (given that if the person has fallen the person is still able to move so may be regarded as less critical) dependent on how the CPU 202 is configured. In implementations where the optional step S514 is used, a person crawling may be considered as being in a fall position since they may be mobile (crawling) only at the moment when the classification status occurred. If they are thereafter immobile, step S514 may give a negative result, thus enabling a fall condition determination at step S522. In other implementations in which step S514 is used, a crawling state (which implies a crawling position) may be considered as being as a non-fall position.

In response to determining at step S508 that the person is in a non-fall position, an additional classification using the output of the active reflected wave detector 206 is not needed to arrive at the conclusion that the person is in a non-fall position. This will be described in more detail below.

A first implementation of the second example is described with reference to Figure 5b in which the activity sensor 204 is used.

Referring back to step S508, in response to the person being classified as being in a non-fall position at step S508, at step S526 the active reflected wave detector 206 is deactivated. Whilst step S526 is shown as being performed after step S508 this need not be the case, the deactivation merely has to happen after the relevant data needed for the classifying (at step S506) is received.

At step S528 the CPU 202 commences a second time window having a predefined duration (shown in the Figure 5b as being Y secs, where the value of Y can be set accordingly). The value of Y may be the same as Z, however the values of Y and Z could be different. When the first example and the second example described herein are combined, the value of Y may be the same as (or different to) the duration of the time window commenced at step S406.

Step S528 may be performed in a number of ways. In one example, at step S528 the CPU 202 may control a counter i2, which may be internal or external to the CPU 202, to start counting. It will be appreciated that this counter may count incrementally or decrementally. In another example, at step S528 the CPU 202 may start monitoring a real time clock that always runs and using the real time clock to monitor the second time window.

Upon determining that the second time window has expired at step S532 (e.g. the counter i2 has reached the threshold value of Y) during which the CPU 202 does not receive a signal indicative of activity in the environment from the activity sensor 204, the process 500 proceeds back to step S502 (shown in Figure 5a) where the CPU 202 activates the active reflected wave detector 206 so that it is in an activated state and operable to measure wave reflections from the environment.

If, at step S530, the CPU 202 receives a signal indicative of activity in the environment from the activity sensor 204 before expiry of the second time window Y the process 500 proceeds to step S534, where the CPU 202 commences a third time window having a predefined duration (shown in the Figure 5b as being X seconds, where the value of X can be set accordingly). The value of X may be the same as Y, however the values of X and Y could be different. When the first example and the second example described herein are combined, the value of X may be the same as (or different to) the duration of the time window commenced at step S406.

At step S534, the CPU 202 awaits expiry of the third time window X in which no further activity detections (e.g. motion detections) have occurred before proceeding back to step S502 (shown in Figure 5a) where the CPU 202 activates the active reflected wave detector 206 so that it is in an activated state and operable to measure wave reflections from the environment.

Thus it can be seen from Figure 5b that if the initial classification (at step S506) determined the person was in a non-fall state, which may for example be standing (or may merely be a non-fall state), then if there is no detected activity by the activity sensor 204 after a second time window Y (which may advantageously be more than the first time window Z, since the person was not identified as being in a positionally dangerous position), then the process 500 activates the active reflected wave detector 206 and returns to the first classification step (step S506) - with the radar being off during that in-between time period. On the other hand if activity (e.g. motion) is detected by the low-power activity sensor 204 during the second time window Y, the person is at the lower level of risk of all, so the system returns to waiting for a third time window X where the CPU 202 waits for the activity sensor 202 to stop detecting activity for a sufficient amount of time to justify activating the active reflected wave detector 206 again.

In the first implementation of the second example, if the CPU 202 classifies the second status of the person detected in the environment as being in a non-fall position at step S520 (determined at step S522), the process proceeds to step 526 where the active reflected wave detector 206 is deactivated. Whilst step S526 is shown as being performed after step S522 this need not be the case, the deactivation merely has to happen after the relevant data needed for the classifying (at step S520) is received. Thus the process 500 proceeds to step S526 if the first status is that the person is in a non-fall position (determined at step S508) or the second status is that the person is in a non-fall position (determined at step S522).

A second implementation of the second example is described with reference to Figures 5c and 5d in which the activity sensor 204 is used. In the second implementation of the second example, the person's non-fall position is further classified into either a reclined non-fall position (referred to above as a reclined safe supported state) or a standing non-fall position (which may be a free-standing state or a standing safe supported state if the person is standing and leaning on a wall).

Figure 5c illustrates the steps in process 500 that are performed when, in response to the person being classified as being in a non-fall position at step S508, the CPU 202 determines, at step S540, that the person is in a standing non-fall position based on the output from the active reflected wave detector 206. It will be appreciated that steps S506 and step S540 may be performed as a single step.

At step S542 the active reflected wave detector 206 is deactivated. Whilst step S542 is shown as being performed after steps S508 and S540, this need not be the case, the deactivation merely has to happen after the relevant data needed for the classifying (at step S506) is received. At step S544 the CPU 202 commences a second time window having a predefined duration (shown in the Figure 5c as being Y secs, where the value of Y can be set accordingly). The value of Y may be the same as Z, however the values of Y and Z could be different. When the first example and the second example described herein are combined, the value of Y may be the same as (or different to) the duration of the time window commenced at step S406.

Step S544 may be performed in a number of ways. In one example, at step S544 the CPU 202 may control a counter i2, which may be internal or external to the CPU 202, to start counting. It will be appreciated that this counter may count incrementally or decrementally. In another example, at step S544 the CPU 202 may start monitoring a real time clock that always runs and using the real time clock to monitor the second time window.

Upon determining that the second time window has expired at step S548 (e.g. the counter i2 has reached the threshold value of Y) during which the CPU 202 does not receive a signal indicative of activity in the environment from the activity sensor 204, the process 500 proceeds back to step S502 (shown in Figure 5a) where the CPU 202 activates the active reflected wave detector 206 so that it is in an activated state and operable to measure wave reflections from the environment.

If, at step S546, the CPU 202 receives a signal indicative of activity in the environment from the activity sensor 204 before expiry of the second time window Y the process 500 proceeds to step S550, where the CPU 202 commences a third time window having a predefined duration (shown in the Figure 5c as being X secs, where the value of X can be set accordingly). The value of X may be the same as Y, however the values of X and Y could be different. When the first example and the second example described herein are combined, the value of X may be the same as (or different to) the duration of the time window commenced at step S406.

At step S550, the CPU 202 awaits expiry of the third time window X in which no further activity detections (e.g. motion detections) have occurred before proceeding back to step S502 (shown in Figure 5a) where the CPU 202 activates the active reflected wave detector 206 so that it is in an activated state and operable to measure wave reflections from the environment. Figure 5d illustrates the steps in process 500 that are performed when, in response to the person being classified as being in a non-fall position at step S508, the CPU 202 determines, at step S560, that the person is in a reclined non-fall position based on the output from the active reflected wave detector 206. It will be appreciated that steps S506 and step S560 may be performed as a single step.

At step S562 the active reflected wave detector 206 is deactivated. Whilst step S562 is shown as being performed after steps S508 and S560, this need not be the case, the deactivation merely has to happen after the relevant data needed for the classifying (at step S506) is received.

At step S564 the CPU 202 commences a fourth time window having a predefined duration (shown in the Figure 5c as being W secs, where the value of W can be set accordingly).

Step S564 may be performed in a number of ways. In one example, at step S564 the CPU 202 may control a counter i3, which may be internal or external to the CPU 202, to start counting. It will be appreciated that this counter may count incrementally or decrementally. In another example, at step S564 the CPU 202 may start monitoring a real time clock that always runs and using the real time clock to monitor the second time window.

Upon determining that the fourth time window has expired at step S568 (e.g. the counter i3 has reached the threshold value of W) during which the CPU 202 does not receive a signal indicative of activity in the environment from the activity sensor 204, the process 500 proceeds back to step S502 (shown in Figure 5a) where the CPU 202 activates the active reflected wave detector 206 so that it is in an activated state and operable to measure wave reflections from the environment.

If, at step S566, the CPU 202 receives a signal indicative of activity in the environment from the activity sensor 204 before expiry of the fourth time window W the process 500 proceeds to step S570, where the CPU 202 commences the third time window X. As noted above, the value of X may be the same as Y, however the values of X and Y could be different. When the first example and the second example described herein are combined, the value of X may be the same as (or different to) the duration of the time window commenced at step S406.

At step S570, the CPU 202 awaits expiry of the third time window X in which no further activity detections (e.g. motion detections) have occurred before proceeding back to step S502 (shown in Figure 5a) where the CPU 202 activates the active reflected wave detector 206 so that it is in an activated state and operable to measure wave reflections from the environment.

The fourth time window W may be greater than the third time window X. Alternatively or additionally, the fourth time window W may be greater than the second time window Y. Alternatively or additionally, the fourth time window W may be greater than the first time window Z.

It is useful to identify when the person is in a reclined non-fall position because the person may be in a safe resting position (in which they are supported in a position elevated from the floor) for a long time, and periodically conducting radar measurements with a same periodicity as defined by the second time window Y may drain the battery more than necessary, especially if they are resting for many hours. In this case the fourth time window W may be used in between reflective wave measurements that is greater than the second time window Y. If one example, if the person is still in the reclined non-fall state after the fourth predetermined time period and/or if there is a detected movement during that time period, the system behaves as shown in figure 5d. In alternative example, however, if the person is still determined to be in the same potentially resting state (the reclined non-fall state) at the expiry of the fourth time window W, the process 500 merely ends, only restarting (according to the first example) when activity is detected by the activity detector 204.

In the second example the duration of the time window between the CPU 202 classifying the status of the person as being in a fall position or a non-fall position is dependent on the first status is detected (whereby this time window is at its longest when the first status is that the person is in a reclined non-fall state, and is at its shortest when the first status is that the person is in a fall position). The time window can be longer if the person is in a static rest state because it's relatively likely that they will not be moving for a long time.

In the second implementation of the second example (Figures 5c and 5d), if the CPU 202 classifies the second status of the person detected in the environment as being in a non-fall position at step S520 (determined at step S522), the process proceeds back to step S506.

*III. Aborting **a** reflective wave measurement process*

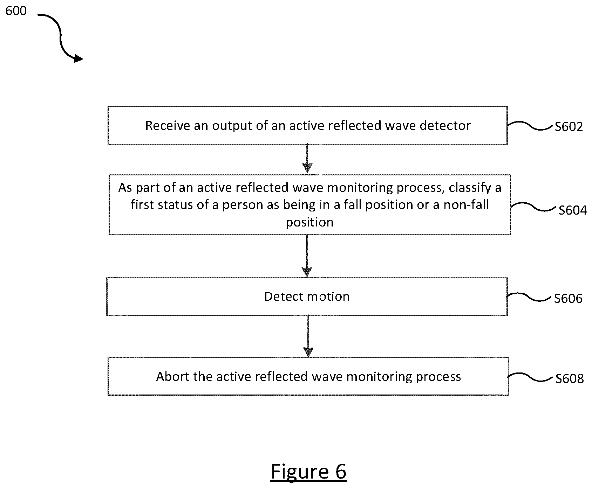

We now describe a third non-claimed example of the present disclosure with reference to Figure 6 which illustrates a process 600 performed by the CPU 202 for determining a status of a person in an environment.

In the third example an active reflective wave measurement process is used to determine a status of a person in an environment, and this active reflective wave measurement process is aborted in response to detecting a motion event satisfying at least one predefined criterion in order to conserve power.

As described in more detail below, in the third example, the activity sensor 204 is optional and may not be present in the device 102.

The active reflective wave measurement process being aborted could comprise a process in which the active reflected wave detector 206 is waiting to wake-up to take another measurement once a time window expires. In another implementation the active reflected wave detector 206 does not go to sleep in the first place (there is no window in which its power is turned off). In particular, the active reflective wave measurement process being aborted may be the process 500 described above with reference to the second example, however this is not essential and the the active reflective wave measurement process may be any process in which the output of an active reflected wave detector is used to determine a condition of a person in an environment.

It should be noted that when the process 600 is started, the active reflected wave detector 206 is in an activated state operable to measure wave reflections from the environment.

At step S602, the CPU 202 receives an output from the active reflected wave detector 206 that is indicative of one or more of the measured wave reflections.

At step S604, the CPU 202 classifies a first status of a person detected in the environment as being in a fall position or a non-fall position, based on an output of the active reflected wave detector 206.

Once the CPU 202 has received all of the relevant data needed for the classifying (at step S604) the CPU 202 may deactivate the active reflected wave detector 206. In other implementations, the active reflected wave detector 206 remains active and continues to supply data of measured wave reflections from the environment to the CPU 202 until the classification result is determined.

At step S606, the CPU 202 detects motion associated with the person in the environment that satisfies at least one predefined criterion. The CPU 202 may detect the motion based on an output from the active reflected wave detector 206. For example, at step S606 the CPU may detect that the person's motion exceeds a predefined velocity and/or displacement based on processing the output from the active reflected wave detector 206. If the device 102 comprises an activity sensor 204 in the form of a motion detector (e.g. a PIR detector, which comprises a PIR sensor), the CPU 202 may detect the motion based on an output from the motion detector that is indicative of motion being detected (the criterion being the conditions upon which the PIR detector detects motion). In another example, the CPU 202 may detect the motion based on the device 102 receiving a motion detection message from a remote device.

At step S608, the CPU 202 aborts the active reflective wave measurement process in response to the motion detected at step S606.

The third example is advantageous in that there is a saving of power that would have been otherwise consumed by way of active reflected wave measurements performed in the the active reflective wave measurement process should there have been no motion detected.

If the first status determined at step S604 is that the person is in a fall position, after aborting the active reflected wave monitoring process, the active reflected wave monitoring process may be restarted. The restarting of the active reflected wave monitoring process may be restarted after a predetermined amount of delay (e.g. 15-30 seconds) after the motion detection event, or the restarting of the active reflected wave monitoring process may be immediate.

If the first status determined at step S604 is that the person is in a non-fall position, after aborting the active reflected wave monitoring process, the active reflected wave monitoring process may, in some implementations, be terminated without restarting. This is because, for such implementations, if the person is in a non-fall state the motion detector is relied upon to detect motion if they fall to the floor, so advantageously the active reflected wave monitoring process (in which power consumption intensive active wave measurements are performed by the active reflected wave detector 206) does not need to be restarted.

By way of example only, we describe how the third example may be applied to the the process 500 described above with reference to the second example.

In particular, step S604 may correspond to step S508 and in the event that the first status is that the person is in a fall position, step S606 may correspond to a positive determination that motion has been detected at S514. In this example, aborting the active reflected wave monitoring process advantageously prevents the reactivation of the active reflected wave detector (at step S518) and reclassification of the status of the person as being in a fall position or a non-fall position (at step 520) which could result in a power consuming task of issuing of a fall detection alert (at step S524). Further unnecessary issuing of alerts/notifications can result in transmission collisions and/or can increase load on the device that needs to receive and handle the alert/notification. Further in cases where the abortion of the process delays or aborts a next operation of the active reflected wave detector that can also save significant power.

In this example, the active reflected wave monitoring process 500 is aborted, and the active reflected wave monitoring process 500 is restarted (see 'Yes' arrow from step S514 to step S502 in Figure 5a). As noted above, the restarting of the active reflected wave monitoring process 500 may be restarted after a predetermined amount of delay thus the CPU 202 may wait for expiry of a time window having a predefined duration of P seconds (where the value of P can be set accordingly) in which no motion is detected by the motion detector 204 before proceeding going back to step S502 and restarting the active reflected wave monitoring process 500. Preferably the timing window of P seconds is shorter than the third time window of X seconds (used at step S534, S550, and S570 when the first status of the person was that they were in a non-fall state) because it is advantageous that the monitoring to be more responsive if the person were detected in a fall position since its already potentially a safety concern.

In another example, step S604 may correspond to step S508 and in the event that the first status is that the person is in a non-fall position, step S606 may correspond to a positive determination that motion has been detected at any of steps S530, S546, and S570. In this example, aborting the active reflected wave monitoring process prevents the process 500 proceeding to step S502 whereby the active reflected wave detector is reactivated after a predetermined amount of time has elapsed. In this example, the active reflected wave monitoring process 500 is aborted, and the active reflected wave monitoring process 500 is not restarted. Instead, after the active reflected wave monitoring process 500 has been aborted, the active reflected wave detector 206 remains deactivated and the CPU 202 may perform process 400 for determining a status of an environment and/or of a person therein, which as described above, relies on the activity sensor 204 (e.g. motion detector) to detect motion before triggering the more power consuming active reflected wave detector 206. This leverages the idea that if there is movement that meets the criteria that the person's condition is not critical, the power intensive active reflected wave monitoring process can be aborted as the person is, after all, still moving.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1.  A computer implemented method of determining a status of an environment (100) and of a person (106) therein, the method comprising:

    receiving (S402) an output of an activity sensor (204) to monitor said environment;
    commencing (S406) a time window after the activity sensor detects (S404) activity in said environment;
    upon expiry of the time window(S410), activating (S412) an active reflected wave detector (206) to measure wave reflections from the environment, wherein the active reflected wave detector consumes more power in an activated state than the activity sensor in an activated state; and
    determining (S414) a status of the environment and a state of a person detected therein based on an output of the active reflected wave detector that is indicative of one or more of the measured wave reflections, wherein the determining the state of the person based on the output of the active reflected wave detector comprises determining that the person is in a fall position or a non-fall position;
wherein the method comprises delaying expiry of the time window in response to the activity sensor detecting activity in said environment during the time window.

2. The computer implemented method of claim 1, wherein said determining a status comprises detecting whether a person is in the environment, and in an event that a person is not detected in the environment determining that the environment is unoccupied.

3. The computer implemented method of any preceding claim, wherein said determining a state of the person is based on at least one height associated with a respective at least one reflection from the person conveyed in the output of the active reflected wave detector.

4. The computer implemented method of any preceding claim, wherein said determining a state of the person is based on a spatial distribution of reflections conveyed in the output of the active reflected wave detector.

5. The computer implemented method of any preceding claim, wherein determining that the person is in a fall position or a non-fall position comprises:

identifying that one or more of the reflections conveyed in the output of the active reflected wave detector are associated with a body of said person or a portion thereof;
determining a spatial position in said environment that is associated with the body of portion thereof, the spatial position being based on said one or more of the reflections that were received by the active reflected wave detector; and
at least one of:

classifying the person as being in the fall position if the spatial position is within a threshold distance from a floor of the environment; and
classifying the person as being in the non-fall position if the spatial position is not within a threshold distance from the floor of the environment.

6. The computer implemented method of any preceding claim, wherein the time window has a duration between 30 and 120 seconds.

7. The computer implemented method of any preceding claim, wherein the activity sensor is a motion detector.

8. The computer implemented method of claim 7, wherein the motion detector is a passive infrared detector.

9. The computer implemented method of any preceding claim, wherein the active reflected wave detector is a radar sensor.

10. The computer implemented method of any preceding claim, wherein the activity sensor has a field of view which overlaps with a field of view of the active reflected wave detector.

11. A non-transitory computer-readable storage medium comprising instructions which, when executed by a processor (202) cause the processor to perform the method of any preceding claim.

12. A device (102) for determining a status of an environment (100) and of a person (106) therein, the device comprising a processor (202), wherein the processor is configured to:

receive (S402) an output of an activity sensor (204) to monitor said environment;
commence (S406) a time window after the activity sensor detects (S404) activity in said environment;
upon expiry of the time window (S410), activate (S412) an active reflected wave detector (206) to measure wave reflections from the environment, wherein the active reflected wave detector consumes more power in an activated state than the activity sensor in an activated state; and
determine (S414) a status of the environment and a state of a person detected therein based on an output of the active reflected wave detector that is indicative of one or more of the measured wave reflections, wherein the determination of the state of the person based on the output of the active reflected wave detector comprises determining that the person is in a fall position or a non-fall position;
wherein the processor is configured to delay expiry of the time window in response to the activity sensor detecting activity in said environment during the time window.

13. A device according to claim 12 wherein the processor is configured to perform the method of any one of claims 2 to 10.

14. A device according to claim 12 or 13 wherein the device further comprises the activity sensor.

15. A device according to any one of claims 12 to 14, wherein the device further comprises the active reflected wave detector.

**Patentansprüche**

1. Computerimplementiertes Verfahren zum Bestimmen eines Status einer Umgebung (100) und einer Person (106) darin, wobei das Verfahren umfasst:

    Empfangen (S402) einer Ausgabe eines Aktivitätssensors (204), um die Umgebung zu überwachen;
    Starten (S406) eines Zeitfensters, nachdem der Aktivitätssensor Aktivität in der Umgebung detektiert hat (S404);
    nach Ablauf des Zeitfensters (S410), Aktivieren (S412) eines aktiven Detektors für reflektierte Wellen (206), um Wellenreflexionen von der Umgebung zu messen, wobei der aktive Detektor für reflektierte Wellen mehr Leistung in einem aktivierten Zustand verbraucht als der Aktivitätssensor in einem aktivierten Zustand; und
    Bestimmen (S414) eines Status der Umgebung und eines Status einer darin detektierten Person basierend auf einer Ausgabe des aktiven Detektors für reflektierte Wellen, der eine oder mehrere der gemessenen Wellenreflexionen angibt, wobei das Bestimmen des Status der Person basierend auf der Ausgabe des aktiven Detektors für reflektierte Wellen Bestimmen umfasst, dass sich die Person in einer Sturzposition oder einer Nicht-Sturzposition befindet;
    wobei das Verfahren Verzögern eines Ablaufs des Zeitfensters als Antwort darauf umfasst, dass der Aktivitätssensor Aktivität in der Umgebung während des Zeitfensters detektiert.

2. Computerimplementiertes Verfahren nach Anspruch 1, wobei das Bestimmen eines Status Detektieren umfasst, ob sich eine Person in der Umgebung befindet, und falls keine Person in der Umgebung detektiert wird, Bestimmen, dass die Umgebung nicht besetzt ist.

3. Computerimplementiertes Verfahren nach einem vorstehenden Anspruch, wobei das Bestimmen eines Status der Person auf mindestens einer Höhe basiert, die mit einer jeweiligen mindestens einen Reflexion von der Person verknüpft ist, die in der Ausgabe des aktiven Detektors für reflektierte Wellen übermittelt wird.

4. Computerimplementiertes Verfahren nach einem vorstehenden Anspruch, wobei das Bestimmen eines Status der Person auf einer räumlichen Verteilung von Reflexionen basiert, die in der Ausgabe des aktiven Detektors für reflektierte Wellen übermittelt werden.

5. Computerimplementiertes Verfahren nach einem vorstehenden Anspruch, wobei Bestimmen, dass sich die Person in einer Sturzposition oder einer Nicht-Sturzposition befindet, umfasst:

    Identifizieren, das eine oder mehrere Reflexionen, die in der Ausgabe des aktiven Detektors für reflektierte Wellen übermittelt werden, mit einem Körper der Person oder einem Teil davon verknüpft sind;
    Bestimmen einer räumlichen Position in der Umgebung, die mit dem Körper oder einem Teil davon verknüpft ist, wobei die räumliche Position auf der einen oder den mehreren der Reflexionen basiert, die von dem aktiven Detektor für reflektierte Wellen empfangen wurden; und
    mindestens eines von:

        Klassifizieren der Person als in der Sturzposition befindlich, wenn die räumliche Position innerhalb einer Schwellendistanz von einem Boden der Umgebung ist; und
        Klassifizieren der Person als in der Nicht-Sturzposition befindlich, wenn die räumliche Position nicht innerhalb einer Schwellendistanz von dem Boden der Umgebung ist.

6. Computerimplementiertes Verfahren nach einem vorstehenden Anspruch, wobei das Zeitfenster eine Dauer zwischen 30 und 120 Sekunden aufweist.

7. Computerimplementiertes Verfahren nach einem vorstehenden Anspruch, wobei der Aktivitätssensor ein Bewegungsdetektor ist.

8. Computerimplementiertes Verfahren nach Anspruch 7, wobei der Bewegungsdetektor ein passiver Infrarotdetektor ist.

9. Computerimplementiertes Verfahren nach einem vorstehenden Anspruch, wobei der aktive Detektor für reflektierte Wellen ein Radarsensor ist.

10. Computerimplementiertes Verfahren nach einem vorstehenden Anspruch, wobei der Aktivitätssensor ein Blickfeld aufweist, das mit einem Blickfeld des aktiven Detektors für reflektierte Wellen überlappt.

11. Nichtflüchtiges computerlesbares Speichermedium, das Anweisungen umfasst, die, wenn sie durch einen Prozessor (202) ausgeführt werden, den Prozessor veranlassen, das Verfahren nach einem vorstehenden Anspruch durchzuführen.

12. Vorrichtung (102) zum Bestimmen eines Status einer Umgebung (100) und einer Person (106) darin, wobei die Vorrichtung einen Prozessor (202) umfasst, wobei de Prozessor konfiguriert ist zum:

Empfangen (S402) einer Ausgabe eines Aktivitätssensors (204), um die Umgebung zu überwachen;

Starten (S406) eines Zeitfensters, nachdem der Aktivitätssensor Aktivität in der Umgebung detektiert hat (S404);

nach Ablauf des Zeitfensters (S410), Aktivieren (S412) eines aktiven Detektors für reflektierte Wellen (206), um Wellenreflexionen von der Umgebung zu messen, wobei der aktive Detektor für reflektierte Wellen mehr Leistung in einem aktivierten Zustand verbraucht als der Aktivitätssensor in einem aktivierten Zustand; und

Bestimmen (S414) eines Status der Umgebung und eines Status einer darin detektierten Person basierend auf einer Ausgabe des aktiven Detektors für reflektierte Wellen, der eine oder mehrere der gemessenen Wellenreflexionen angibt, wobei das Bestimmen des Status der Person basierend auf der Ausgabe des aktiven Detektors für reflektierte Wellen Bestimmen umfasst, dass sich die Person in einer Sturzposition oder einer Nicht- Sturzposition befindet;

wobei der Prozessor konfiguriert ist, Ablauf des Zeitfensters als Antwort darauf zu verzögern, dass der Aktivitätssensor Aktivität in der Umgebung während des Zeitfensters detektiert.

**13.** Vorrichtung nach Anspruch 12, wobei der Prozessor konfiguriert ist, das Verfahren nach einem der Ansprüche 2 bis 10 durchzuführen.

**14.** Vorrichtung nach Anspruch 12 oder 13, wobei die Vorrichtung weiter den Aktivitätssensor umfasst.

**15.** Vorrichtung nach einem der Ansprüche 12 bis 14, wobei die Vorrichtung weiter den aktiven Detektor für reflektierte Wellen umfasst.

## Revendications

**1.** Procédé mis en œuvre par ordinateur de détermination d'un état d'un environnement (100) et d'une personne (106) dans celui-ci, le procédé comprenant :

la réception (S402) d'une sortie d'un capteur d'activité (204) pour surveiller ledit environnement ;

le fait de débuter (S406) une fenêtre temporelle après que le capteur d'activité a détecté (S404) une activité dans ledit environnement ;

suite à l'expiration de la fenêtre temporelle (S410), l'activation (S412) d'un détecteur actif d'ondes réfléchies (206) pour mesurer des réflexions d'ondes provenant de l'environnement, dans lequel le détecteur actif d'ondes réfléchies consomme plus d'énergie dans un état activé que le capteur d'activité dans un état activé ; et

la détermination (S414) d'un état de l'environnement et d'un état d'une personne détectée dans celui-ci sur la base d'une sortie du détecteur actif d'ondes réfléchies qui indique une ou plusieurs des réflexions d'ondes mesurées, dans lequel la détermination de l'état de la personne sur la base de la sortie du détecteur actif d'ondes réfléchies comprend la détermination que la personne se trouve dans une position de chute ou une position de non chute ;

dans lequel le procédé comprend le retard de l'expiration de la fenêtre temporelle lorsque le capteur d'activité détecte une activité dans ledit environnement pendant la fenêtre temporelle.

**2.** Procédé mis en œuvre par ordinateur selon la revendication 1, dans lequel ladite détermination d'un état comprend la détection pour établir si une personne se trouve dans l'environnement, et dans le cas où une personne n'est pas détectée dans l'environnement, la détermination que l'environnement est inoccupé.

**3.** Procédé mis en œuvre par ordinateur selon une quelconque revendication précédente, dans lequel ladite détermination d'un état de la personne est basée sur au moins une hauteur associée à au moins une réflexion respective de la personne transmise dans la sortie du détecteur actif d'ondes réfléchies.

**4.** Procédé mis en œuvre par ordinateur selon une quelconque revendication précédente, dans lequel ladite détermination d'un état de la personne est basée sur une distribution spatiale de réflexions transmises dans la sortie du détecteur actif d'ondes réfléchies.

**5.** Procédé mis en œuvre par ordinateur selon une quelconque revendication précédente, dans lequel la détermination que la personne se trouve dans une position de chute ou une position de non chute comprend :

l'identification qu'une ou plusieurs des réflexions transmises dans la sortie du détecteur actif d'ondes réfléchies sont associées à un corps de ladite personne ou à une partie de celui-ci ;

la détermination d'une position spatiale dans ledit environnement qui est associée au corps ou à la partie de celui-ci, la position spatiale étant basée sur lesdites une ou plusieurs des réflexions qui ont été reçues par le détecteur actif d'ondes réfléchies ; et

au moins l'une parmi :

la classification de la personne comme étant dans la position de chute si la position spatiale se situe à une distance seuil d'un plancher de l'environnement ; et
la classification de la personne comme étant dans la position de non chute si la position spatiale ne se situe pas à une distance seuil du plancher de l'environnement.

6. Procédé mis en œuvre par ordinateur selon une quelconque revendication précédente, dans lequel la fenêtre temporelle présente une durée comprise entre 30 et 120 secondes.

7. Procédé mis en œuvre par ordinateur selon une quelconque revendication précédente, dans lequel le capteur d'activité est un détecteur de mouvement.

8. Procédé mis en œuvre par ordinateur selon la revendication 7, dans lequel le détecteur de mouvement est un détecteur infrarouge passif.

9. Procédé mis en œuvre par ordinateur selon une quelconque revendication précédente, dans lequel le détecteur actif d'ondes réfléchies est un capteur radar.

10. Procédé mis en œuvre par ordinateur selon une quelconque revendication précédente, dans lequel le capteur d'activité présente un champ de vision qui se superpose à un champ de vision du détecteur actif d'ondes réfléchies.

11. Support de stockage non transitoire lisible par ordinateur comprenant des instructions qui, lorsqu'elles sont exécutées par un processeur (202) amènent le processeur à réaliser le procédé selon une quelconque revendication précédente.

12. Dispositif (102) pour déterminer un état d'un environnement (100) et d'une personne (106) dans celui-ci, le dispositif comprenant un processeur (202), dans lequel le processeur est configuré pour :

recevoir (S402) une sortie d'un capteur d'activité (204) pour surveiller ledit environnement ;
débuter (S406) une fenêtre temporelle après que le capteur d'activité a détecté (S404) l'activité dans ledit environnement ;
suite à l'expiration de la fenêtre temporelle (S410), activer (S412) un détecteur actif d'ondes réfléchies (206) pour mesurer des réflexions d'ondes provenant de l'environnement, dans lequel le détecteur actif d'ondes réfléchies consomme plus d'énergie dans un état activé que le capteur d'activité dans un état activé ; et
déterminer (S414) un état de l'environnement et un état d'une personne détectée dans celui-ci sur la base d'une sortie du détecteur actif d'ondes réfléchies qui indique une ou plusieurs des réflexions d'ondes mesurées, dans lequel la détermination de l'état de la personne sur la base de la sortie du détecteur actif d'ondes réfléchies comprend la détermination que la personne se trouve dans une position de chute ou une position de non chute ;
dans lequel le processeur est configuré pour retarder l'expiration de la fenêtre temporelle lorsque le capteur d'activité détecte une activité dans ledit environnement pendant la fenêtre temporelle.

13. Dispositif selon la revendication 12, dans lequel le processeur est configuré pour réaliser le procédé selon l'une quelconque des revendications 2 à 10.

14. Dispositif selon la revendication 12 ou 13, dans lequel le dispositif comprend en outre le capteur d'activité.

15. Dispositif selon l'une quelconque des revendications 12 à 14, dans lequel le dispositif comprend en outre le détecteur actif d'ondes réfléchies.

Figure 1

EP 4 343 727 B1

Activity Sensor

204

CPU

202

Memory

208

Active Reflected Wave Detector

206

102

<u>Figure 2</u>

Figure 3a

Figure 3b

400

Use activity sensor to monitor an environment — S402

Determine that the activity sensor has detected activity — S404

Commence time window — S406

Activity sensor has detected activity?

S408

Yes

No

Time window expired?

S410

No

Yes

Activate active reflected wave detector to perform presence detection — S412

Determine a status of the environment and/or of a person therein based on input received from the active reflected wave detector — S414

## Figure 4

500

Activate active reflected wave detector
to perform presence detection — S502

Classify a first status of a detected person — S506

Person is in a fall position? — No → B

S508

Yes

Deactivate active reflected wave detector — S510

Control timer i1 to start counting from an initial value — S512

Yes ← Activity sensor has detected motion? → No

S514

Timer i1 has reached predetermined threshold value Z? — S516

Yes → No

Activate active reflected wave detector — S518

Classify a second status of a detected person — S520

S522

Person still in fall position? — No → C

Issue a fall detection alert — S524

<u>Figure 5a</u>

B

S526

Deactivate active reflected wave detector

Control timer i2 to start counting from an initial value

S528

C

Yes

S530

Activity sensor has detected activity?

No

Time period X elapsed in which no activity detected by the activity sensor?

No

S532

Timer i2 has reached predetermined threshold value Y?

No

S534

Yes

Yes

S502

Activate active reflected wave detector to perform presence detection

Figure 5b

502

**B**

Determine that person is in a
standing non-fall position
— S540

Deactivate active reflected wave detector
— S542

Control timer i2 to start counting from an initial
value
— S544

S546

Activity sensor has
detected activity?

No                                    Yes

S548

No    Timer i2 has reached predetermined
threshold value Y?

S550

Time period X elapsed in
which no further
activity detected by
the activity sensor?

No

Yes

Yes

S502

Activate active reflected wave detector
to perform presence detection

Figure 5c

B

Determine that person is in a
reclined non-fall position — S560

Deactivate active reflected wave detector — S562

Control timer i3 to start counting from an initial
value — S564

S566

No ← Activity sensor has
detected activity? → Yes

S568

No ← Timer i3 has reached predetermined
threshold value W?

Yes

S570

No ← Time period X elapsed in
which no further
activity detected by
the activity sensor?

Yes

S502

Activate active reflected wave detector
to perform presence detection

Figure 5d

600

Receive an output of an active reflected wave detector — S602

As part of an active reflected wave monitoring process, classify a first status of a person as being in a fall position or a non-fall position — S604

Detect motion — S606

Abort the active reflected wave monitoring process — S608

## Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0367402 A
- WO 2020223283 A
- WO 2016155789 A1